# EUROPEAN PATENT APPLICATION

(11) **EP 4 033 484 A2**
(43) Date of publication of application: **27.07.2022**
(21) Application number: 22177557.0
(22) Date of filing: 07.06.2022
(51) Int. Cl.: G10L 15/18, G10L 15/06, G10L 15/04

(54) **RECOGNITION OF SEMANTIC INFORMATION OF A SPEECH SIGNAL, TRAINING A RECOGNITION MODEL**

(30) Priority: 09.06.2021 CN 202110645151
(71) Applicant: Apollo Intelligent Connectivity (Beijing) Technology Co., Ltd., Beijing 100176 (CN)
(72) Inventor: ZHOU, Yi, Beijing, 100176 (CN); ZUO, Shengyong, Beijing, 100176 (CN)
(74) Representative: Stöckeler, Ferdinand

(57) **Abstract**

A method and an apparatus for processing an audio signal, a method and an apparatus for training a voice recognition model, a method and an apparatus for training a semantic recognition model, an electronic device and a storage medium are provided, which relate to a field of artificial intelligence, and in particular to fields of voice recognition, natural language processing and deep learning. The method for processing an audio signal includes: recognizing an audio signal to be processed, so as to obtain a target voice segment in the audio signal to be processed and a first sentence associated with the target voice segment, wherein the audio signal to be processed is obtained based on a predetermined text; determining a second sentence associated with the target voice segment in the predetermined text; comparing the first sentence with the second sentence, so as to obtain a first comparison result; and labeling the target voice segment based on the second sentence and the first comparison result, so as to obtain a voice segment having a first labeling data. The first labeling data includes the second sentence and a first data indicating the first comparison result.

## Description

### TECHNICAL FIELD

The present disclosure relates to a field of artificial intelligence, in particular to fields of voice recognition, natural language processing and deep learning, and more particularly to a method and an apparatus for processing an audio signal, a method and an apparatus for training a voice recognition model, a method and an apparatus for training a semantic recognition model, an electronic device and a storage medium.

### BACKGROUND

With a development of electronic technology, an intelligent voice technology that provides intelligent services to users has developed rapidly. In order to obtain a good intelligent voice model, it is necessary to rely on a large number of voice segments labeled with correct sentences. However, an audio usually includes a plurality of voice segments. In order to obtain the plurality of voice segments, the audio needs to be cut, and correct sentences are labeled on the cut voice segments. In a related art, the audio is manually cut and labeled. Since the audio is usually continuously recorded audio with a long length, the manual method has problems of low efficiency and high labor cost.

### SUMMARY

A method for processing audio signal is provided, and a method for training a voice recognition model and a method for training a semantic recognition model are provided based on an obtained voice segments having a labeling data.

According to one aspect of the present disclosure, a method for processing an audio signal is provided, including: recognizing an audio signal to be processed, so as to obtain a target voice segment in the audio signal to be processed and a first sentence associated with the target voice segment, the audio signal to be processed is obtained based on a predetermined text; determining a second sentence associated with the target voice segment in the predetermined text; comparing the first sentence with the second sentence, so as to obtain a first comparison result; and labeling the target voice segment based on the second sentence and the first comparison result, so as to obtain a voice segment having a first labeling data, the first labeling data includes the second sentence and a first data indicating the first comparison result.

According to another aspect of the present disclosure, a method for training a voice recognition model is provided, including: obtaining a first predicted sentence associated with a first sample voice segment by using the first sample voice segment as an input of the voice recognition model, the first sample voice segment includes a second labeling data, and the second labeling data includes a true sentence and a fourth data indicating a first sample type of the first sample voice segment; and training the voice recognition model based on the true sentence, the first predicted sentence and the first sample type, the first sample voice segment is obtained by using the method for processing the audio signal, and the first sample type is associated with the first comparison result.

According to another aspect of the present disclosure, a method for training a semantic recognition model is provided, including: obtaining a second predicted sentence associated with a second sample voice segment by using the second sample voice segment as an input of the voice recognition model, the second sample voice segment inlcudes a third labeling data, and the third labeling data inlcudes a true semantic information and a fifth data indicating a second sample type of the second sample voice segment; obtaining a predicted semantic information of the second predicted sentence by using the second predicted sentence as an input of the semantic recognition model; and training the semantic recognition model based on the predicted semantic information, the true semantic information and the second sample type, the second sample voice segment is obtained by using the method for processing the audio signal, and the second sample type is associated with the second comparison result.

According to another aspect of the present disclosure, an apparatus for processing an audio signal is provided, including: an audio recognizing module configured to recognize an audio signal to be processed, so as to obtain a target voice segment in the audio signal to be processed and a first sentence associated with the target voice segment, the audio signal to be processed is obtained based on a predetermined text; an associated sentence determining module configured to determine a second sentence associated with the target voice segment in the predetermined text; a sentence comparing module configured to compare the first sentence with the second sentence, so as to obtain a first comparison result; and a voice labeling module configured to label the target voice segment based on the second sentence and the first comparison result, so as to obtain a voice segment having a first labeling data, the first labeling data inlcudes the second sentence and a first data indicating the first comparison result.

According to another aspect of the present disclosure, an apparatus for training a voice recognition model is provided, including: a first sentence predicting module configured to obtain a first predicted sentence associated with a first sample voice segment by using the first sample voice segment as an input of the voice recognition model, the first sample voice segment includes a second labeling data, and the second labeling data includes a true sentence and a fourth data indicating a first sample type of the first sample voice segment; and a first model training module configured to train the voice recognition model based on the true sentence, the first predicted sentence and the first sample type, the first sample voice segment is obtained by using the apparatus for processing the audio signal, and the first sample type is associated with the first comparison result.

According to another aspect of the present disclosure, an apparatus for training a semantic recognition model is provided, including: a second sentence predicting module configured to obtain a second predicted sentence associated with a second sample voice segment by using the second sample voice segment as an input of the voice recognition model, the second sample voice segment includes a third labeling data, and the third labeling data includes a true semantic information and a fifth data indicating a second sample type of the second sample voice segment; a semantic predicting module configured to obtain a predicted semantic information of the second predicted sentence by using the second predicted sentence as an input of the semantic recognition model; and a second model training module configured to train the semantic recognition model based on the predicted semantic information, the true semantic information and the second sample type, the second sample voice segment is obtained by using the apparatus for processing the audio signal, and the second sample type is associated with the second comparison result.

According to another aspect of the present disclosure, an electronic device is provided, including: at least one processor; and a memory communicatively connected with the at least one processor;, the memory stores instructions executable by the at least one processor, and the instructions are executed by the at least one processor to cause the at least one processor to perform at least one of the following methods provided by the present disclosure: a method for processing an audio signal, a method for training a voice recognition model, and a method for training a semantic recognition model.

According to another aspect of the present disclosure, a non-transitory computer-readable storage medium storing computer instructions is provided, the computer instructions are configured to cause a computer to perform at least one of the following methods provided by the present disclosure: a method for processing an audio signal, a method for training a voice recognition model, and a method for training a semantic recognition model.

According to another aspect of the present disclosure, a computer program product is provided, including a computer program, the computer program, when executed by a processor, implements at least one of the following methods provided by the present disclosure: a method for processing an audio signal, a method for training a voice recognition model, and a method for training a semantic recognition model.

It should be understood that the content described in this section is not intended to identify critical or important features of embodiments of the disclosure, nor is it intended to limit the scope of the disclosure. Other features of the present disclosure will become readily understood by the following description.

### BRIEF DESCRIPTION OF THE DRAWINGS

The drawings are used for better understanding of the present disclosure, and do not constitute a limitation to the present disclosure, in which:
FIG. 1 is a schematic diagram of an application scene of a method and an apparatus for processing an audio signal, a method and an apparatus for training a model, a device and a medium according to the embodiments of the present disclosure;
FIG. 2 is a schematic flowchart of a method for processing an audio signal according to the embodiments of the present disclosure;
FIG. 3 is a schematic principle diagram of recognizing an audio signal to be processed according to the embodiments of the present disclosure;
FIG. 4 is a schematic principle diagram of processing an audio signal according to the embodiments of the present disclosure;
FIG. 5 is a schematic flowchart of a method for processing an audio signal according to another embodiment of the present disclosure;
FIG. 6 is a schematic flowchart of a method for training a voice recognition model according to the embodiments of the present disclosure;
FIG. 7 is a schematic flowchart of a method for training a semantic recognition model according to the embodiments of the present disclosure;
FIG. 8 is a structural block diagram of an apparatus for processing an audio signal according to the embodiments of the present disclosure;
FIG. 9 is a structural block diagram of an apparatus for training a voice recognition model according to the embodiments of the present disclosure;
FIG. 10 is a structural block diagram of an apparatus for training a semantic recognition model according to the embodiments of the present disclosure; and
FIG. 11 is a block diagram of an electronic device used to implement the methods of embodiments of the present disclosure.

### DETAILED DESCRIPTION OF EMBODIMENTS

The following describes exemplary embodiments of the present disclosure with reference to the drawings, which include various details of the embodiments of the present disclosure to facilitate understanding, and should be regarded as merely exemplary. Therefore, those skilled in the art should recognize that various changes and modifications may be made to the embodiments described herein without departing from the scope and spirit of the present disclosure. Likewise, for clarity and conciseness, descriptions of well-known functions and structures are omitted in the following description.

The present disclosure provides a method for processing an audio signal, and the method includes an audio recognizing stage, a sentence determining stage, a sentence comparing stage and a voice labeling stage. In the audio recognizing stage, an audio signal to be processed is recognized, so as to obtain a target voice segment in the audio signal to be processed and a first sentence associated with the target voice segment, the audio signal to be processed is obtained based on a predetermined text. In the sentence determining stage, a second sentence associated with the target voice segment in the predetermined text is determined. In the sentence comparing stage, the first sentence is compared with the second sentence, so as to obtain a first comparison result. In the voice labeling stage, the target voice segment is labeled based on the second sentence and the first comparison result, so as to obtain a voice segment having a first labeling data. The first labeling data includes the second sentence and a first data indicating the first comparison result.

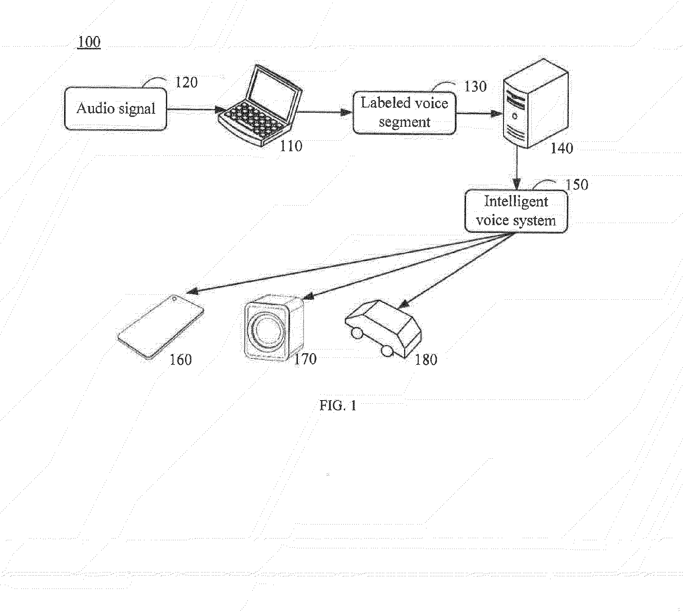

An application scene of a method and an apparatus provided by the present disclosure will be described below with reference to FIG. 1.

FIG. 1 is a schematic diagram of an application scene of a method and an apparatus for processing an audio signal, a method and an apparatus for training a model, a device and a medium according to the embodiments of the present disclosure.

As shown in FIG. 1, the application scene 100 includes a terminal device 110, the terminal device may be any electronic device with processing functions, including but not limited to smart phones, tablet computers, laptop computers, desktop computers, and servers, etc.

The terminal device 110 may, for example, process an input audio signal 120, specifically recognize a voice segment in the audio signal 120, predict a sentence associated with the voice segment in the audio signal according to a recognition result, and determine a natural sentence on which the voice segment is recorded according to the predicted sentence. The terminal device 110 may also label the sentence segment with the natural sentence, so as to obtain a labeled voice segment 130. The labeled voice segment may be used as a training sample to train an intelligent voice system.

According to the embodiments of the present disclosure, as shown in FIG. 1, the application scene 100 may further include a server 140. The terminal device 110 may be communicatively connected to the server 140 through a network, and the network may include wired or wireless communication links.

Exemplarily, the server 140 may be used to train the intelligent voice system. Before training, the labeled voice segment 130 may be obtained from the terminal device 110 as the training sample. The intelligent voice system 150 may include, for example, a voice recognition function and a semantic recognition function, so as to implement a semantic understanding for a voice of a user.

Exemplarily, the intelligent voice system 150 trained by the server 140 may be installed in smart devices such as a smart phone 160, a smart speaker 170, and a smart vehicle 180, so as to implement a voice interaction with the user and improve the user experience.

Exemplarily, the server may be, for example, a server that provides various services, such as a background management server that may provide support for applications running on the terminal device 110. For example, the server may be a cloud server, a distributed system server, or a server combined with a blockchain.

In an embodiment, the terminal device 110 and the server 140 may be, for example, the same device, and the device has a plurality of processing modules, so that any one of the processing modules recognizes the audio signal 120 to obtain a labeled voice segment, and the intelligent voice system 150 is trained by other processing modules other than the one processing module.

It should be understood that the number and type of terminal device, server and smart device in FIG. 1 are only illustrative. There may be any number and type of terminal device, server, and smart device according to implementation requirement.

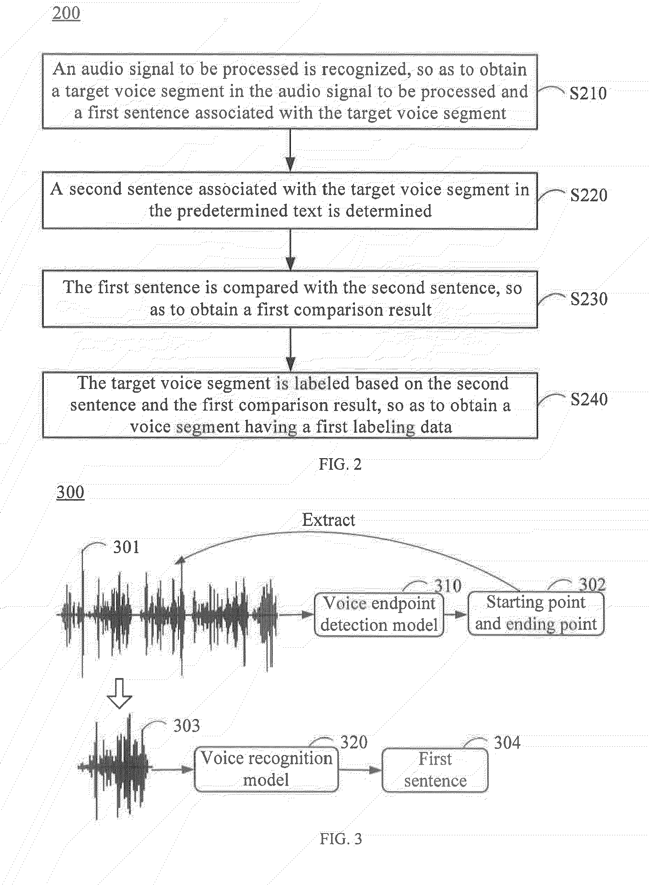

A method for training a classification model according to the embodiments of the present disclosure will be described in detail below with reference to FIGS. 2 to 6.

FIG. 2 is a schematic flowchart of a method for processing an audio signal according to the embodiments of the present disclosure.

As shown in FIG, 2, the method 200 for processing an audio signal in this embodiment may include operations S210 to S240.

In operation S210, an audio signal to be processed is recognized, so as to obtain a target voice segment in the audio signal to be processed and a first sentence associated with the target voice segment, the audio signal to be processed is obtained based on a predetermined text.

According to the embodiments of the present disclosure, the audio signal to be processed may be obtained, for example, by recording a voice of reading a predetermined text. The predetermined text includes at least one natural sentence, and the target voice segment in the audio signal to be processed may be an audio obtained by reading any one of the at least one natural sentence. In this embodiment, an existing audio cutting tool may be used to cut the audio signal to be processed, so as to obtain at least one target voice segment. Subsequently, an existing voice recognition technology is used to recognize the cut target voice segment, and one or more sentences respectively corresponding to the at least one target voice segment are obtained as a first sentence associated with the target voice segment. The existing voice recognition technology may include, for example, a technology composed of a convolutional neural network and a connectionist temporal classification (CTC) method, a speech-to-text (STT) technology, and the like.

In an embodiment, the audio signal to be processed may also be segmented based on a voice activity detection method. The voice activity detection (VAD), also known as a voice activity detection and a voice boundary detection, may detect whether a voice exist or not in a noisy environment. Specifically, a voice signal and a non-voice signal may be separated from an audio signal, a starting point and an ending point of the voice signal may be located, and the starting point and the ending point may be called endpoints.

According to the embodiments of the present disclosure, the audio signal to be processed may be an audio signal pre-recorded and stored in a predetermined storage space. In an embodiment, the audio signal to be processed may also be stored in a certain directory of an application package having a voice processing function, so as to make a call convenient during processing. Alternatively, the audio signal to be processed may be recorded in real time, which is not limited in the present disclosure.

It should be understood that the above method for obtaining the target voice segment and the first sentence is only an example to facilitate understanding of the present disclosure, which is not limited in the present disclosure.

In operation S220, a second sentence associated with the target voice segment in the predetermined text is determined.

According to the embodiments of the present disclosure, a sentence with the highest similarity to the first sentence in the predetermined text may be used as the second sentence associated with the target voice segment. The similarity may be determined by, for example, a term frequency-inverse document frequency (TF-IDF) algorithm, Levenshtein and other algorithms.

It should be understood that the above-mentioned method for determining the second sentence is only used as an example to facilitate understanding of the present disclosure, which is not limited in the present disclosure.

In operation S230, the first sentence is compared with the second sentence, so as to obtain a first comparison result.

According to the embodiments of the present disclosure, for example, a similarity between the first sentence and the second sentence obtained in operation S220 may be used as the first comparison result. Alternatively, the first comparison result may be determined according to a size relationship between the similarity and a first threshold. For example, if the similarity is lower than the first threshold, it may be determined that the first comparison result is that the first sentence is inaccurate. If the similarity is not lower than the first threshold, it may be determined that first comparison result is that the first sentence is accurate. The first threshold may be set according to actual requirements, which is not limited in the present disclosure.

In an embodiment, the first sentence and the second sentence may also be compared character by character, if the first sentence and the second sentence are identical, it is determined that the first comparison result is that the first sentence is accurate; otherwise, it is determined that the first sentence is inaccurate. It should be understood that the method for obtaining the first comparison result is only used as an example to facilitate understanding of the present disclosure, which is not limited in the present disclosure.

In operation S240, the target voice segment is labeled based on the second sentence and the first comparison result, so as to obtain a voice segment having a first labeling data.

According to the embodiments of the present disclosure, the second sentence and a first data indicating the first comparison result may be used as a label for a voice segment, so as to obtain the voice segment having the first labeling data. If the first comparison result is that the first sentence is inaccurate, the first data indicating the first comparison result may be 0; otherwise, the first data may be 1. When the voice segment having the first labeling data is used as a training sample, the first data may be used to represent a sample type associated with the first comparison result, and the sample type is a first sample type relative to a voice recognition model. For example, if the first comparison result is that the first sentence is inaccurate, the first data may represent that the sample type is a negative sample, otherwise the first data may represent that the sample type is a positive sample. It should be understood that the above-mentioned first data is only used as an example to facilitate understanding of the present disclosure, which is not limited in the present disclosure.

The method 200 for processing an audio signal in this embodiment may implement automatic cutting and automatic labeling of voice segments in an audio signal to be processed. Compared with the manual method in the related art, the processing efficiency of the audio signal may be improved, and inaccurate cutting or labeling caused by manual fatigue may be avoided to a certain extent. Further, the method 200 for processing an audio signal of this embodiment may effectively distinguish a voice segment as a positive sample from a voice segment as a negative sample by comparing a first sentence and a second sentence and labeling an audio segment based on the comparison result. Therefore, when the audio segment having a labeling data is used to train the voice recognition model in the intelligent voice system, the process of collecting additional negative samples may be omitted, thereby reducing the cost of the sample preparation stage when training the voice recognition model in the intelligent voice system and improving a diversity of labeling information. Alternatively, when training the voice recognition model in the intelligent voice system, only voice segments that may be selected as positive samples from target voice segments having labeling data may be selected to train the model.

FIG. 3 is a schematic principle diagram of recognizing an audio signal to be processed according to the embodiments of the present disclosure;

In an embodiment, when an audio signal to be processed is recognized, the audio signal to be processed may be read in a form of a file stream, and the read audio signal may be detected and recognized in real time. In this way, the method for processing an audio signals of the present disclosure may be applied to a scene of real-time acquisition of audio signals, and the situation of providing a small amount of training samples for model training due to system failures and the like may be alleviated as much as possible.

Exemplarily, as shown in FIG. 3, in an embodiment 300, when an audio signal 301 to be processed is recognized, the audio signal 301 to be processed may be read in a form of a file stream, so as to detect a starting point and ending point 302 of a target voice segment in the audio signal 301 to be processed. For example, the read audio signal 301 to be processed may be input into a voice endpoint detection model 310, so as to detect the starting point and ending point of the target voice segment.

If the starting point of the target voice segment is detected, the subsequently read audio signal may be recognized until the ending point of the target voice segment is detected. Through the recognition for the subsequently read audio signal, a first sentence 304 associated with the target voice segment may be obtained.

After the starting point and ending point 302 of the target voice segment are detected, a target voice segment 303 may be extracted from the audio signal 301 to be processed based on the starting point and ending point 302. For example, the audio signal read between the starting point and ending point 302 may be used as the target voice segment 303. For example, after the starting point is detected, a new file may be created, the audio signal read after the starting point is written into the new file, and the writing operation of the new file may be terminated after the ending point is detected. The data written in the new file is a target audio segment. When the target audio segment is labeled, for example, a first labeling data may be used as a file name of the new file, so as to complete the labeling of the target audio segment.

In an embodiment, after the target voice segment 303 is obtained, the target voice segment 303 may be input into a voice recognition model 320 and processed by the voice recognition model 320, and then the first sentence 304 is obtained. The voice recognition model 320 may be a pre-trained model, for example, may be an acoustic model constructed based on the aforementioned convolutional neural network and CTC method, or may be a recurrent neural network model based on an attention mechanism, or the like. The recurrent neural network model may be, for example, a Seq2Seq model, which is not limited in the present disclosure. It should be understood that the voice recognition model 320 is another model independent from the intelligent voice system, but may have a similar structure to the voice recognition model in the intelligent voice system.

In an embodiment, when the target voice segment is labeled, the target voice segment 303 may also be labeled based on the starting point and ending point 302. Specifically, the target voice segment 303 may be labeled with a third data indicating the starting point and the ending point. For example, the third data may include a time interval between the starting point and the starting point of the audio signal to be processed and a time interval between the ending point and the starting point of the audio signal to be processed. Through the labeling of the third data, the target voice segment may be quickly and conveniently located based on the third data in subsequent use.

According to the embodiments of the present disclosure, when a predetermined text includes a plurality of natural sentences, the audio signal to be processed may accordingly include a plurality of target voice segments. If the audio signal to be processed is read in the form of the file stream, a plurality of sentences may be sequentially obtained through the above-mentioned method for recognizing an audio signal to be processed. In the case that the plurality of natural sentences are arranged in sequence, since the audio to be processed is usually obtained by sequentially reading the plurality of natural sentences arranged in sequence, the plurality of sentences obtained in sequence should correspond to the plurality of natural sentences respectively. In this embodiment, when the second sentence associated with the target voice segment in the predetermined text is determined, it is possible to determine a position of the first sentence in a sequence of a plurality of sentences respectively associated with the plurality of target voice segments, in the process of reading the audio signal to be processed in the form of the file stream, and the plurality of sentences in the sequence are arranged in an order of the plurality of sentences. The plurality of sentences are respectively associated with the plurality of target voice segments. Then, a natural sentence located at the position in the sequence of the plurality of natural sentences is determined as the second sentence corresponding to the first sentence, that is, the second sentence associated with the target voice segment.

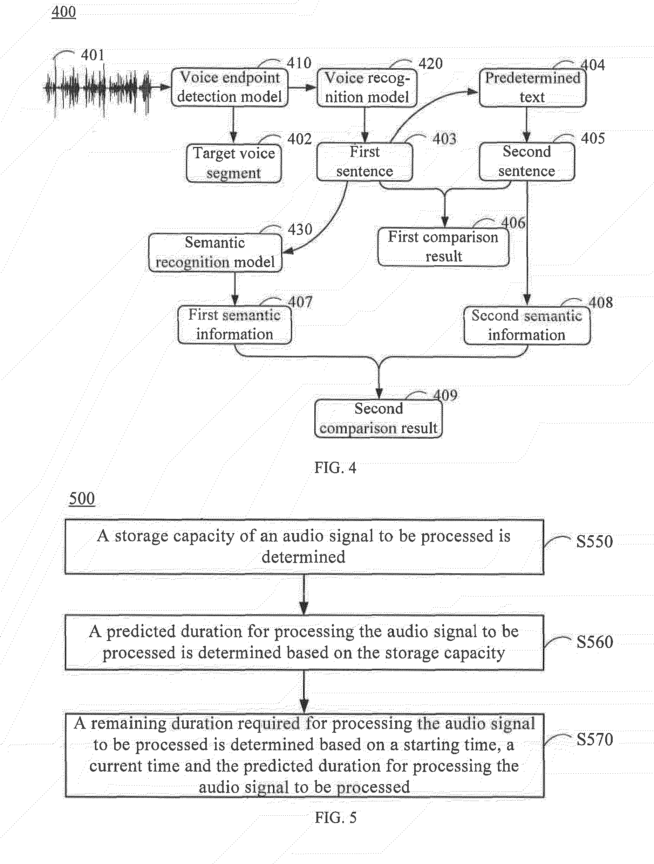

FIG. 4 is a schematic principle diagram of processing an audio signal according to the embodiments of the present disclosure.

According to the embodiments of the present disclosure, in addition to the natural sentence, the predetermined text may also, for example, record a semantic information of the natural sentence. In this embodiment, a semantic information of the second sentence may be used to label the target audio segment, so that the target audio segment having the labeling data may also be used as a training sample for the semantic recognition model in an intelligent voice system. Therefore, when the intelligent voice system needs to be trained, it is not necessary to prepare training samples of the voice recognition model and the semantic recognition model separately.

Exemplarily, as shown in FIG. 4, in an embodiment 400, when an audio signal is processed, the audio signal to be processed 401 may be read in a form of a text stream. The read audio signal is input to a voice endpoint detection model 410 to detect a starting point and an ending point of a target voice segment, so that an audio signal read between the starting point and the ending point is used as the target voice segment 402. If the voice endpoint detection model 410 detects the starting point of the target voice segment, the subsequently read audio signal is input into the voice recognition model 420 for recognition until the ending point of the target voice segment is detected. An information recognized by the voice recognition model 420 based on the input audio signal is used as a first sentence 403. After the first sentence 403 is obtained, a respective sentence may be searched from a predetermined text 404 as a second sentence 405 associated with the target voice segment.

After the second sentence 405 is obtained, a second semantic information 408 of the second sentence 405 may be obtained from the predetermined text 404. In addition, the first sentence 403 may also be compared with the second sentence 405, so as to obtain a first comparison result 406. When the target audio segment is labeled, the target audio segment may also be labeled based on the obtained second semantic information 408. In this way, the first labeling data of the target audio segment also includes the second semantic information, so that the labeled target audio segment may be used as a training sample for the semantic recognition model in the intelligent voice system.

In an embodiment, after the first sentence 403 is obtained, a semantic information of the first sentence 403 may also be extracted to obtain a first semantic information. In an embodiment, the first sentence 403 may be input into a semantic recognition model 430, and the first semantic information 407 may be obtained through processing by the semantic recognition model 430.

The semantic recognition model 430 may be a pre-trained deep learning text classification model, such as a fastText model, a TextCNN model, a TextRNN model, a TextRNN model with an attention mechanism, or a TextRCNN model, which is not limited in the present disclosure. It should be noted that the semantic recognition model 430 is a model independent from the intelligent voice system, and the semantic recognition model 430 may have a similar structure to the semantic recognition model in the intelligent voice system. The semantic information of the natural sentence in the predetermined text may be obtained by using the semantic recognition model 430 to recognize the natural sentence.

After the first semantic information 407 is obtained, the first semantic information 407 may be compare with the second semantic information 408 in this embodiment, so as to obtain a second comparison result 409. Specifically, a similarity between the first semantic information 407 and the second semantic information 408 may be calculated. The second comparison result 409 is determined according to a size relationship between the similarity and a second threshold. For example, if the similarity between the first semantic information and the second semantic information is lower than the second threshold, it may be determined that the second comparison result is that the first semantic information is inaccurate. If the similarity between the first semantic information and the second semantic information is not lower than the second threshold, it may be determined that the second comparison result is that the first semantic information is accurate. The second threshold may be set according to actual requirements, which is not limited in the present disclosure.

In this case, the target voice segment may also be labeled based on the second comparison result. Specifically, the above-mentioned operations for labeling the target voice segment may include labeling the target voice segment based on the second sentence, the second semantic information, the first comparison result, and the second comparison result, so that the first labeling data of the target voice segment further includes the second semantic information and a second data indicating the second comparison result. If the second comparison result is that the first semantic information is inaccurate, then the second data indicating the second comparison result may be 0; otherwise, the second data may be 1. When the voice segment having the first labeling data is used as a training sample, the second data may also be used to characterize a sample type associated with the second comparison result, and the sample type is a second sample type relative to the semantic recognition model. For example, if the second comparison result is that the first semantic information is inaccurate, the second data may represent that the second sample type is a negative sample, otherwise the second data may represent that the second sample type is a positive sample. It should be understood that the above-mentioned form of the second data is only used as an example to facilitate understanding of the present disclosure, which is not limited in the present disclosure.

In the method for processing an audio signal of the embodiment 400, by comparing the first semantic information with the second semantic information and labeling the audio segment based on the comparison result, a voice segment as a positive sample and a voice as a negative sample may be effectively distinguished. Therefore, when the semantic recognition model in the intelligent voice system is trained by using the audio segment having the labeling data, the process of collecting additional negative samples may be omitted, thereby reducing the cost of the sample preparation stage when training the semantic recognition model in the intelligent voice system.

FIG. 5 is a schematic flowchart of a method for processing an audio signal according to another embodiment of the present disclosure.

As shown in FIG. 5, in an embodiment 500, the method for processing an audio signal in this embodiment may further include operations S550 to S570 in addition to operations S210 to S240 described above. The operations S550 to S560 may be performed at any timing. The operation S570 may be periodically performed during the execution of operations S210 to S240.

In operation S550, a storage capacity of the audio signal to be processed is determined.

According to the embodiments of the present disclosure, the storage capacity for storing the audio signal to be processed may be read by calling an API interface provided by a storage device that stores the audio signal to be processed. It should be understood that, the method for determining the storage capacity is only used as an example to facilitate understanding of the present disclosure, which is not limited in the present disclosure.

In operation S560, a predicted duration for processing the audio signal to be processed is determined based on the storage capacity.

According to the embodiments of the present disclosure, a value obtained by dividing the storage capacity by a data consumption speed of a device performing the method for processing the audio signal may be used as the predicted duration. The data consumption speed refers to an amount of data that may be processed per unit time.

In operation S570, a remaining duration required for processing the audio signal to be processed is determined in the process of processing the audio signal to be processed, based on a starting time, a current time and the predicted duration for processing the audio signal to be processed.

According to the embodiments of the present disclosure, a duration between the current time and the starting time may be determined first as an elapsed duration, and a difference between the predicted duration and the elapsed duration is taken as the remaining duration required to process the audio signal to be processed.

After the remaining duration is obtained, the remaining duration may also be displayed in this embodiment, so that the technician may know the processing progress of the audio signal in real time, and the technician may arrange other work.

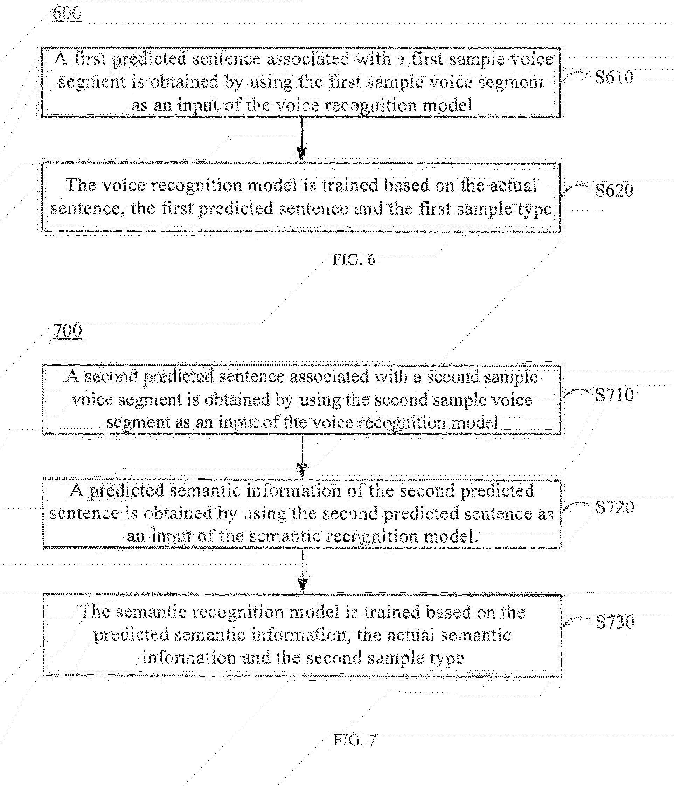

After the target audio segment having the first labeling data is obtained, the labeled target audio segment may be used as a training sample to train the voice recognition model and/or the semantic recognition model, Based on this, the present disclosure also provides a method for training a voice recognition model, which will be described in detail below with reference to FIG. 6.

FIG. 6 is a schematic flowchart of a method for training a voice recognition model according to the embodiments of the present disclosure.

As shown in FIG. 6, the method 600 for training a voice recognition model of this embodiment may include operations S610 to S620.

In operation S610, a first predicted sentence associated with a first sample voice segment is obtained by using the first sample voice segment as an input of the voice recognition model.

The first sample voice segment has a second labeling data, and the second labeling data includes a true sentence and a fourth data indicating a first sample type of the first sample voice segment. In an embodiment, the first sample voice segment may be the target voice segment having the first labeling data obtained by the above-mentioned labeling, the second labeling data is the first labeling data described above, the true sentence is the second sentence described above, and the fourth data is the first data described above. The first sample type is associated with the first comparison result described above, and the association relationship is as shown above, which will not be repeated here.

The voice recognition model may be a model in an intelligent voice system. The voice recognition model is similar in structure to the voice recognition model independent from the intelligent voice system described above, which will not be repeated here.

In operation S620, the voice recognition model is trained based on the true sentence, the first predicted sentence and the first sample type.

In this embodiment, a value of a loss function of the voice recognition model may be determined based on the true sentence, the first predicted sentence and the first sample type. Then, according to the value of the loss function of the voice recognition model, a gradient descent algorithm or a backpropagation algorithm is used to train the voice recognition model. It should be understood that the method for training a voice recognition model is similar to that in the prior art, which will not be repeated here.

The present disclosure also provides a method for training a semantic recognition model, which will be described in detail below with reference to FIG. 7.

FIG. 7 is a schematic flowchart of a method for training a semantic recognition model according to the embodiments of the present disclosure.

As shown in FIG. 7, the method 700 for training a semantic recognition model of this embodiment may include operations S710 to S730.

In operation S710, a second predicted sentence associated with a second sample voice segment is obtained by using the second sample voice segment as an input of the voice recognition model.

The second sample voice segment has a third labeling data, and the third labeling data includes a true semantic information and a fifth data indicating a second sample type of the second sample voice segment. In an embodiment, the second sample voice segment may be the target voice segment obtained by the above-mentioned labeling based on the second semantic information, the second sentence, the first comparison result, and the second comparison result. The third labeling data is the first labeling data including the second semantic information and the second data described above. Correspondingly, the true semantic information is the second semantic information, the fifth data is the second data indicating the second comparison result. The second sample type is associated with the second comparison result described above, and the association relationship is as shown above, which will not be repeated here.

The operation S710 is similar to the operation of obtaining the first predicted sentence described above, which will not be repeated here.

In operation S720, a predicted semantic information of the second predicted sentence is obtained by using the second predicted sentence as an input of the semantic recognition model.

The semantic recognition model may be a model in an intelligent voice system, and the semantic recognition model is similar in structure to the previously described semantic recognition model independent from the intelligent voice system, which will not be repeated here. The second predicted sentence is processed by the semantic recognition model, and the predicted semantic information may be output by the semantic recognition model.

In operation S730, the semantic recognition model is trained based on the predicted semantic information, the true semantic information and the second sample type.

In this embodiment, a value of a loss function of the semantic recognition model may be determined based on the true semantic information, the predicted semantic information and the second sample type. Then, according to the value of the loss function of the semantic recognition model, a gradient descent algorithm or a back propagation algorithm is used to train the semantic recognition model. It should be understood that the method for training a semantic recognition model is similar to an existing technology, which will not be repeated here.

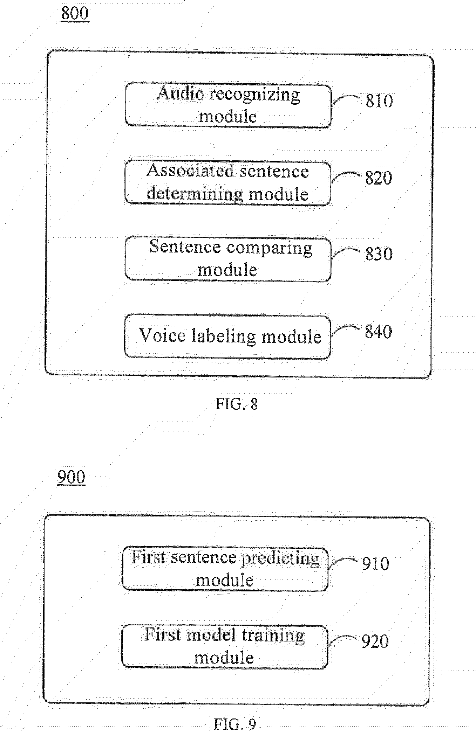

Based on the method for processing an audio signal provided by the present disclosure, the present disclosure also provides an apparatus for processing an audio signal, which will be described in detail below with reference to FIG. 8.

FIG. 8 is a structural block diagram of an apparatus for processing an audio signal according to the embodiments of the present disclosure.

As shown in FIG. 8, the apparatus 800 for processing an audio signal in this embodiment may include an audio recognizing module 810, an associated sentence determining module 820, a sentence comparing module 830 and a voice labeling module 840.

The audio recognizing module 810 is used to recognize an audio signal to be processed, so as to obtain a target voice segment in the audio signal to be processed and a first sentence associated with the target voice segment, the audio signal to be processed is obtained based on a predetermined text. In an embodiment, the audio recognizing module 810 may be used to perform the operation S210 described above, which will not be repeated here.

The associated sentence determining module 820 is used to determine a second sentence associated with the target voice segment in the predetermined text. In an embodiment, the associated sentence determining module 820 may be used to perform the operation S220 described above, which will not be repeated here.

The sentence comparing module 830 is used to compare the first sentence with the second sentence, so as to obtain a first comparison result. In an embodiment, the sentence comparing module 830 may be used to perform the operation S230 described above, which will not be repeated here.

The voice labeling module 840 is used to label the target voice segment based on the second sentence and the first comparison result, so as to obtain a voice segment having a first labeling data. The first labeling data includes the second sentence and a first data indicating the first comparison result. In an embodiment, the voice labeling module 840 may be used to perform the operation S240 described above, which will not be repeated here.

According to the embodiments of the present disclosure, the predetermined text further includes a second semantic information of the second sentence. The apparatus 800 for processing an audio signal further includes a semantic extracting module and a semantic comparing module. The semantic extracting module is used to extract a semantic information of the first sentence, so as to obtain a first semantic information. The semantic comparing module is used to compare the first semantic information with the second semantic information, so as to obtain a second comparison result. The voice labeling module 840 is used to label the target voice segment based on the second sentence, the second semantic information, the first comparison result and the second comparison result. The first labeling data further includes the second semantic information and a second data indicating the second comparison result.

According to the embodiments of the present disclosure, the audio recognizing module 810 may include an audio reading sub-module, a voice detecting sub-module, a recognizing sub-module and a voice extracting sub-module. The audio reading sub-module is used to read the audio signal to be processed in a form of a file stream. The voice detecting sub-module is used to detect a starting point and an ending point of the target voice segment in the process of the audio reading sub-module reading the audio signal to be processed. The recognizing sub-module is used to recognize the read audio signal, in response to the voice detecting sub-module detecting the starting point of the target voice segment; and terminate the recognition for the audio signal, in response to the voice detecting sub-module detecting the ending point of the target voice segment, so as to obtain the first sentence associated with the target voice segment. The voice extracting sub-module is used to extract the audio signal between the starting point and the ending point, so as to obtain the target voice segment.

According to the embodiments of the present disclosure, the predetermined text includes a plurality of natural sentences arranged in sequence, and the audio signal to be processed includes a plurality of target voice segments. The associated sentence determining module 820 may include a position determining sub-module and a sentence determining sub-module. The position determining sub-module is used to determine a position of the first sentence in a sequence of a plurality of sentences respectively associated with the plurality of target voice segments, in the process of reading the audio signal to be processed in the form of the file stream, and the plurality of sentences in the sequence are arranged in an order of the plurality of sentences. The sentence determining sub-module is used to determine a natural sentence located at the position in the sequence of the plurality of natural sentences, as the second sentence.

According to the embodiments of the present disclosure, the voice labeling module is further used to label the target voice segment based on the starting point and the ending point. The first labeling data further includes a third data indicating the starting point and the ending point.

According to the embodiments of the present disclosure, the apparatus 800 for processing an audio signal further includes a storage capacity determining module, a predicted duration determining module and a remaining duration determining module. The storage capacity determining module is used to determine a storage capacity of the audio signal to be processed. The predicted duration determining module is used to determine, based on the storage capacity, a predicted duration for processing the audio signal to be processed. The remaining duration determining module is used to determine a remaining duration required for processing the audio signal to be processed in the process of the apparatus processing the audio signal to be processed, based on a starting time, a current time and the predicted duration for processing the audio signal to be processed.

Based on the method for training a voice recognition model provided by the present disclosure, the present disclosure also provides a apparatus for training a voice recognition model, which will be described in detail below with reference to FIG. 9.

FIG. 9 is a structural block diagram of an apparatus for training a voice recognition model according to the embodiments of the present disclosure.

As shown in FIG. 9, the apparatus 900 for training a voice recognition model in this embodiment may include a first sentence predicting module 910 and a first model training module 920.

The first sentence predicting module 910 is used to obtain a first predicted sentence associated with a first sample voice segment by using the first sample voice segment as an input of the voice recognition model, the first sample voice segment has a second labeling data, and the second labeling data includes a true sentence and a fourth data indicating a first sample type of the first sample voice segment. The first sample voice segment may be obtained by using the apparatus for processing an audio signal described above, and the first sample type is associated with the first comparison result. In an embodiment, the first sentence predicting module 910 may be used to perform the operation S610 described above, which will not be repeated here.

The first model training module 920 is used to train the voice recognition model based on the true sentence, the first predicted sentence and the first sample type. In an embodiment, the first model training module 920 may be used to perform the operation S620 described above, which will not be repeated here.

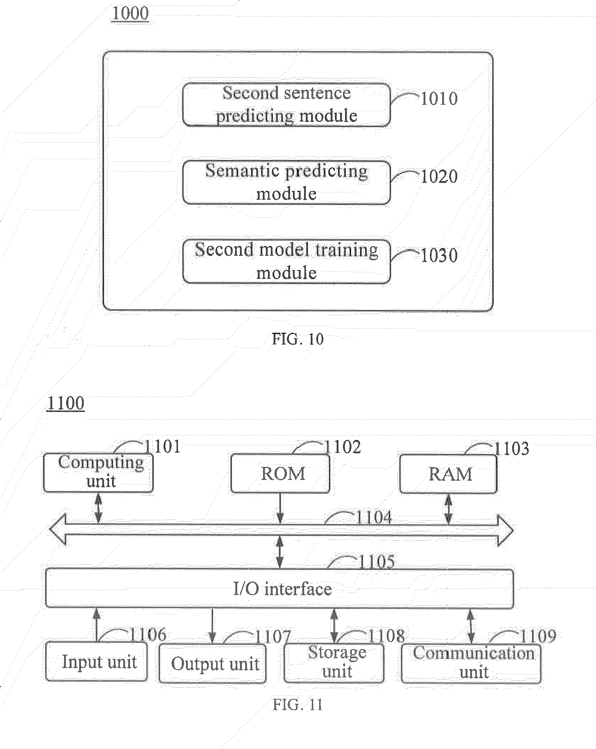

Based on the method for training a semantic recognition model provided by the present disclosure, the present disclosure also provides an apparatus for training a semantic recognition model, which will be described in detail below with reference to FIG. 10.

FIG. 10 is a structural block diagram of an apparatus for training a semantic recognition model according to the embodiments of the present disclosure.

As shown in FIG. 10, the apparatus 1000 for training a semantic recognition model in this embodiment may include a second sentence predicting module 1010, a semantic predicting module 1020 and a second model training module 1030.

The second sentence predicting module 1010 is used to obtain a second predicted sentence associated with a second sample voice segment by using the second sample voice segment as an input of the voice recognition model, the second sample voice segment has a third labeling data, and the third labeling data includes a true semantic information and a fifth data indicating a second sample type of the second sample voice segment. The second sample voice segment may be obtained by using the apparatus for processing an audio signal described above, and the second sample type is associated with the second comparison result. In an embodiment, the second sentence predicting module 1010 may be used to perform the operation S710 described above, which will not be repeated here.

The semantic predicting module 1020 is used to obtain a predicted semantic information of the second predicted sentence by using the second predicted sentence as an input of the semantic recognition model. In an embodiment, the semantic predicting module 1020 may be used to perform the operation S720 described above, which will not be repeated here.

The second model training module 1030 is used to train the semantic recognition model based on the predicted semantic information, the true semantic information and the second sample type. In an embodiment, the second model training module 1030 may be used to perform the operation S730 described above, which will not be repeated here.

In the technical solution of the present disclosure, the collection, storage, use, processing, transmission, provision, disclosure, and application of the user's personal information involved are all in compliance with relevant laws and regulations, take essential confidentiality measures, and do not violate public order and good customs.

In the technical solution of the present disclosure, authorization or consent is obtained from the user before the user's personal information is obtained or collected.

According to the embodiments of the present disclosure, the present disclosure also provides an electronic device, a readable storage medium and a computer program product.

FIG. 11 illustrates a schematic block diagram of an example electronic device 1100 that may be used to implement embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 11, the device 1100 includes a computing unit 1101, which may execute various appropriate actions and processing according to a computer program stored in a read only memory (ROM) 1102 or a computer program loaded from a storage unit 1108 into a random access memory (RAM) 1103. Various programs and data required for the operation of the device 1100 may also be stored in the RAM 1103. The computing unit 1101, the ROM 1102 and the RAM 1103 are connected to each other through a bus 1104. An input/output (I/O) interface 1105 is also connected to the bus 1104.

The I/O interface 1105 is connected to a plurality of components of the device 1100, including: an input unit 1106, such as a keyboard, a mouse, etc.; an output unit 1107, such as various types of displays, speakers, etc.; a storage unit 1108, such as a magnetic disk, an optical disk, etc.; and a communication unit 1109, such as a network card, a modem, a wireless communication transceiver, etc. The communication unit 1109 allows the device 1100 to exchange information/data with other devices through the computer network such as the Internet and/or various telecommunication networks.

The computing unit 1101 may be various general-purpose and/or special-purpose processing components with processing and computing capabilities. Some examples of computing unit 1101 include, but are not limited to, central processing unit (CPU), graphics processing unit (GPU), various dedicated artificial intelligence (AI) computing chips, various computing units that run machine learning model algorithms, digital signal processing (DSP) and any appropriate processor, controller, microcontroller, etc. The computing unit 1101 executes the various methods and processes described above, such as at least one method of the method for processing an audio signal, the method for training a voice recognition model and the method for training a semantic recognition model. For example, in some embodiments, at least one method of the method for processing an audio signal, the method for training a voice recognition model and the method for training a semantic recognition model may be implemented as computer software programs, which are tangibly contained in the machine-readable medium, such as the storage unit 1108. In some embodiments, part or all of the computer programs may be loaded and/or installed on the device 1100 via the ROM 1102 and/or the communication unit 1109. When the computer program is loaded into the RAM 1103 and executed by the computing unit 1101, one or more steps of at least one method of the method for processing an audio signal, the method for training a voice recognition model and the method for training a semantic recognition model described above may be executed. Alternatively, in other embodiments, the computing unit 1101 may be configured to execute at least one method of the method for processing an audio signal, the method for training a voice recognition model and the method for training a semantic recognition model in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, complex programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above-mentioned content. More specific examples of the machine-readable storage media would include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other.

It should be understood that the various forms of processes shown above may be used to reorder, add or delete steps. For example, the steps described in the present disclosure may be executed in parallel, sequentially or in a different order, as long as the desired result of the technical solution disclosed in the present disclosure may be achieved, which is not limited herein.

The above-mentioned implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method (200) for processing an audio signal, comprising:
recognizing (S210) an audio signal to be processed (301, 401), so as to obtain a target voice segment (303, 402) in the audio signal to be processed (301, 401) and a first sentence (304, 403) associated with the target voice segment (303, 402), wherein the audio signal to be processed (301, 401) is obtained based on a predetermined text (404);
determining (S220) a second sentence (405) associated with the target voice segment (303, 402) in the predetermined text (404);
comparing (S230) the first sentence (304, 403) with the second sentence (405), so as to obtain a first comparison result (406); and
labeling (S240) the target voice segment (303, 402) based on the second sentence (405) and the first comparison result (406), so as to obtain a voice segment having a first labeling data,
wherein the first labeling data comprises the second sentence (405) and a first data indicating the first comparison result (406).

2. The method according to claim 1, wherein the predetermined text (404) further comprises a second semantic information (408) of the second sentence (405); and the method further comprises:
extracting a semantic information of the first sentence (304, 403), so as to obtain a first semantic information (407); and
comparing the first semantic information (407) with the second semantic information (408), so as to obtain a second comparison result (409),
wherein the labeling the target voice segment (303, 402) comprises: labeling the target voice segment (303, 402) based on the second sentence (405), the second semantic information (408), the first comparison result (406) and the second comparison result (409);
wherein the first labeling data further comprises the second semantic information (408) and a second data indicating the second comparison result (409).

3. The method according to claim 1 or 2, wherein the recognizing an audio signal to be processed (301, 401) comprises:
recognizing a read audio signal, in response to detecting a starting point of the target voice segment (303, 402) in a process of reading the audio signal to be processed (301, 401) in a form of a file stream;
terminating the recognition for the audio signal, in response to detecting an ending point of the target voice segment (303, 402), so as to obtain the first sentence (304, 403) associated with the target voice segment (303, 402); and
extracting the audio signal between the starting point and the ending point (302), so as to obtain the target voice segment (303, 402).

4. The method according to claim 3, wherein the predetermined text (404) comprises a plurality of natural sentences arranged in sequence; the audio signal to be processed (301, 401) comprises a plurality of target voice segments (303, 402); and the determining a second sentence (405) associated with the target voice segment (303, 402) in the predetermined text (404) comprises:
determining a position of the first sentence (304, 403) in a sequence of a plurality of sentences respectively associated with the plurality of target voice segments (303, 402), in the process of reading the audio signal to be processed (301, 401) in the form of the file stream, wherein the plurality of sentences in the sequence are arranged in an order of the plurality of sentences; and
determining a natural sentence located at the position in the sequence of the plurality of natural sentences, as the second sentence (405).

5. The method according to claim 3, wherein the labeling the target voice segment (303, 402) comprises:
labeling the target voice segment (303, 402) based on the starting point and the ending point (302),
wherein the first labeling data further comprises a third data indicating the starting point and the ending point (302).

6. The method according to any preceding claim, further comprising:
determining (S550) a storage capacity of the audio signal to be processed (301, 401);
determining (S560), based on the storage capacity, a predicted duration for processing the audio signal to be processed (301, 401); and
determining (S570) a remaining duration required for processing the audio signal to be processed (301, 401) in the process of processing the audio signal to be processed (301, 401), based on a starting time, a current time and the predicted duration for processing the audio signal to be processed (301, 401).

7. A method (600) for training a voice recognition model, comprising:
obtaining (S610) a first predicted sentence associated with a first sample voice segment by using the first sample voice segment as an input of the voice recognition model, wherein the first sample voice segment has a second labeling data, and the second labeling data comprises a true sentence and a fourth data indicating a first sample type of the first sample voice segment; and
training (S620) the voice recognition model based on the true sentence, the first predicted sentence and the first sample type,
wherein the first sample voice segment is obtained by using the method according to any one of claims 1 to 6, and the first sample type is associated with the first comparison result (406).

8. A method (700) for training a semantic recognition model, comprising:
obtaining (S710) a second predicted sentence associated with a second sample voice segment by using the second sample voice segment as an input of the voice recognition model, wherein the second sample voice segment has a third labeling data, and the third labeling data comprises a true semantic information and a fifth data indicating a second sample type of the second sample voice segment;
obtaining (S720) a predicted semantic information of the second predicted sentence by using the second predicted sentence as an input of the semantic recognition model; and
training (S730) the semantic recognition model based on the predicted semantic information, the true semantic information and the second sample type,
wherein the second sample voice segment is obtained by using the method according to any one of claims 2 to 6, and the second sample type is associated with the second comparison result (409).

9. An apparatus (800) for processing an audio signal, comprising:
an audio recognizing module (810) configured to recognize an audio signal to be processed, so as to obtain a target voice segment in the audio signal to be processed and a first sentence associated with the target voice segment, wherein the audio signal to be processed is obtained based on a predetermined text;
an associated sentence determining module (820) configured to determine a second sentence associated with the target voice segment in the predetermined text;
a sentence comparing module (830) configured to compare the first sentence with the second sentence, so as to obtain a first comparison result; and
a voice labeling module (840) configured to label the target voice segment based on the second sentence and the first comparison result, so as to obtain a voice segment having a first labeling data,
wherein the first labeling data comprises the second sentence and a first data indicating the first comparison result.

10. The apparatus (800) according to claim 9, wherein the predetermined text further comprises a second semantic information of the second sentence; and the apparatus further comprises:
a semantic extracting module configured to extract a semantic information of the first sentence, so as to obtain a first semantic information; and
a semantic comparing module configured to compare the first semantic information with the second semantic information, so as to obtain a second comparison result,
a storage capacity determining module configured to determine a storage capacity of the audio signal to be processed;
a predicted duration determining module configured to determine, based on the storage capacity, a predicted duration for processing the audio signal to be processed; and
a remaining duration determining module configured to determine a remaining duration required for processing the audio signal to be processed in the process of the apparatus processing the audio signal to be processed, based on a starting time, a current time and the predicted duration for processing the audio signal to be processed
wherein the voice labeling module (840) is configured to label the target voice segment based on the second sentence, the second semantic information, the first comparison result and the second comparison result;
wherein the first labeling data further comprises the second semantic information and a second data indicating the second comparison result,
wherein the audio recognizing module (810) comprises:
an audio reading sub-module configured to read the audio signal to be processed in a form of a file stream;
a voice detecting sub-module configured to detect a starting point and an ending point of the target voice segment in the process of the audio reading sub-module reading the audio signal to be processed;
a recognizing sub-module configured to recognize the read audio signal, in response to the voice detecting sub-module detecting the starting point of the target voice segment; and terminate the recognition for the audio signal, in response to the voice detecting sub-module detecting the ending point of the target voice segment, so as to obtain the first sentence associated with the target voice segment; and
a voice extracting sub-module configured to extract the audio signal between the starting point and the ending point, so as to obtain the target voice segment,
wherein the predetermined text comprises a plurality of natural sentences arranged in sequence; the audio signal to be processed comprises a plurality of target voice segments; and the associated sentence determining module (820) comprises:
a position determining sub-module configured to determine a position of the first sentence in a sequence of a plurality of sentences respectively associated with the plurality of target voice segments, in the process of reading the audio signal to be processed in the form of the file stream, wherein the plurality of sentences in the sequence are arranged in an order of the plurality of sentences; and
a sentence determining sub-module configured to determine a natural sentence located at the position in the sequence of the plurality of natural sentences, as the second sentence,
wherein the voice labeling module (840) is further configured to label the target voice segment based on the starting point and the ending point,
wherein the first labeling data further comprises a third data indicating the starting point and the ending point.

11. An apparatus (900) for training a voice recognition model, comprising:
a first sentence predicting module (910) configured to obtain a first predicted sentence associated with a first sample voice segment by using the first sample voice segment as an input of the voice recognition model, wherein the first sample voice segment has a second labeling data, and the second labeling data comprises a true sentence and a fourth data indicating a first sample type of the first sample voice segment; and
a first model training module (920) configured to train the voice recognition model based on the true sentence, the first predicted sentence and the first sample type,
wherein the first sample voice segment is obtained by using the apparatus according to claim 9 or 10, and the first sample type is associated with the first comparison result.

12. An apparatus (1000) for training a semantic recognition model, comprising:
a second sentence predicting module (1010) configured to obtain a second predicted sentence associated with a second sample voice segment by using the second sample voice segment as an input of the voice recognition model, wherein the second sample voice segment has a third labeling data, and the third labeling data comprises a true semantic information and a fifth data indicating a second sample type of the second sample voice segment;
a semantic predicting module (1020) configured to obtain a predicted semantic information of the second predicted sentence by using the second predicted sentence as an input of the semantic recognition model; and
a second model training module (1030) configured to train the semantic recognition model based on the predicted semantic information, the true semantic information and the second sample type,
wherein the second sample voice segment is obtained by using the apparatus according to claim 10, and the second sample type is associated with the second comparison result.

13. An electronic device, comprising:
at least one processor; and
a memory communicatively connected with the at least one processor; wherein,
the memory stores instructions executable by the at least one processor, and the instructions are executed by the at least one processor to cause the at least one processor to perform the method of any one of claims 1 to 8.

14. A non-transitory computer-readable storage medium storing computer instructions, wherein the computer instructions are configured to cause a computer to perform the method of any one of claims 1 to 8.

15. A computer program product, comprising a computer program, wherein the computer program, when executed by a processor, implements the method of any one of claims 1 to 8.
